# EUROPÄISCHE PATENTSCHRIFT

(11) **EP 1 269 481 B1**
(45) Veröffentlichungstag und Bekanntmachung des Hinweises auf die Patenterteilung: **24.11.2004**
(21) Anmeldenummer: 01929232.5
(22) Anmeldetag: 08.03.2001
(51) Int. Cl.: C23F 11/00, G21C 21/00, G21C 13/087

(54) **VERFAHREN ZUR VERMINDERUNG DER KORROSION EINES BAUTEILS EINER KERNTECHNISCHEN ANLAGE**
METHOD FOR REDUCING THE CORROSION OF A COMPONENT IN A NUCLEAR FACILITY
PROCEDE POUR REDUIRE LA CORROSION D'UN COMPOSANT DANS UNE INSTALLATION NUCLEAIRE

(30) Priorität: 21.03.2000 DE 10013865
(43) Veröffentlichungstag der Anmeldung: 02.01.2003
(73) Patentinhaber: Framatome ANP GmbH, 91058 Erlangen (DE)
(72) Erfinder: STELLWAG, Bernhard, 90482 Nürnberg (DE); VAZ, Patricia, 90419 Nürnberg (DE)
(74) Vertreter: Mörtel & Höfner
(86) Internationale Anmeldenummer: PCT/DE2001/000898
(87) Internationale Veröffentlichungsnummer: WO 2001/071729

(56) Entgegenhaltungen:
- WO-A-96/20132
- DE-C- 19 721 080
- ES-A- 2 063 696
- US-A- 5 205 864
- D. BARROW: "Applications of Sol Gel Ceramics Coatings" KEY ENGINEERING MATERIALS, Bd. 122-124, 1996, Seiten 443-450, XP001005682 switzerland
- S. G. SAWOCHKA ET AL. : "Experience with Inhibitor Injection for IGSCC Inhibition in PWR Steam Generators" PROCEEDINGS OF THE INTERNATIONAL CONFERENCE, CHEMISTRY IN WATER REACTORS: OPERATING EXPERIENCE AND NEW DEVELOPMENTS, Bd. 2, 24. April 1994 (1994-04-24), Seiten 659-666, XP001005681 France
- M. ATIK ET AL.: "Corrosion resistant ZrO2 sol-gel coating on stainless steel" MATERIAL RESEARCH SOCIETY SYMPOSIUM PROCEEDINGS, 1992, Seiten 471-476, XP001000216 Pittsburg,pennsylvania,USA in der Anmeldung erwähnt
- PEDRO DE LIMA NETO ET AL.: "Sol-Gel ZrO2 Coatings for Chemical Protection of Stainless Steel" JOURNAL OF SOL-GEL SCIENCE AND TECHNOLOGY, 1994, Seiten 177-184, XP000435465 in der Anmeldung erwähnt

## Beschreibung

Die Erfindung betrifft ein Verfahren zur Verminderung der Korrosion, insbesondere zur Verminderung der Spannungsrisskorrosion, eines Bauteils in einem wasserführenden Leitungssystem einer kerntechnischen Anlage, insbesondere eines Bauteils im Primärkreislauf eines Siedewasser-Reaktors.

Aus den Fachartikeln von C. Chino et al., "ZrO₂ Coatings an Stainless Steel by the Sol-Gel Process", Eur.Mater.Res.Soc. Monogr., 1992 (EUROGEL '91), Seite 327 bis 333, und von M. Atik, "Corrosion Resistent ZrO₂ Sol-Gel Coating an Stainless Steel", Mater.Res.Soc.Symp.Proc., 1992, Seite 471 bis 476, in "Better Ceramics through Chemistry V", Material Research Society Symposium Proceedings, V1. 271, Pittsburgh, Pennsylvania, ist es bekannt, die Korrosionsbeständigkeit von Edelstahl durch eine nach dem Sol-Gel-Verfahren aufgebrachte Zirkon-Oxid-Beschichtung (ZrO₂) zu erhöhen.

In einem Fachartikel von Pedro de Lima Neto et al. "Sol-Gel ZrO₂ Coatings for Chemical Protection of Stainless Steel", Journal of Sol-Gel Science and Technology, 1994, Seiten 177 bis 184, ist beschrieben, Zirkon-Oxid-Beschichtungen mit Zirkonium-Propoxid (Zr(OC₃H₇)₄) als Precursor und mit Isopropanol, Essigsäure und Wasser als Lösungsmittel aufzubringen.

Ein Fachartikel von D. Barrow, Key Engineering Materials Vols. 122-124 (1996) pp. 443-450, Trans Tech Publications, Switzerland) befasst sich mit der Anwendung von keramischen Beschichtungen auf Sol-Gel-Basis. Für den Bereich der Kerntechnik wird zur Verhinderung der Wasserstoffversprödung auf Brennstoffhüllrohre aus Zirkonium eine Schicht aus Zirkonium oxid mit Hilfe eines Sol-Gel-Verfahrens abgeschieden. Danach wird der Film einer Endbehandlung bei einer Temperatur von 450 °C unterzogen. Ein aus WO96/20132 bekanntes Verfahren befasst sich ebenfalls mit der Beschichtung von Bauteilen aus Zirkonium in Druckwasser- und Siedewasserreaktoren mit Zirkoniumoxid. Nach dem Aufbringen eines entsprechenden Sol-Gel-Films wird dieser mit einer Temperatur von 350-800 °C behandelt.

Die Vermeidung von Korrosion ist zu einer der wichtigsten Aufgaben der Wasserchemie in Kernkraftwerken geworden, denn solche Vorgänge können die Sicherheit, die Zuverlässigkeit und die Effektivität von Kernreaktoren beachtlich beeinflussen. Zur Vermeidung von Korrosion wurden verschiedene wasserchemische Fahrweisen eines Reaktors entwickelt. In Abhängigkeit vom pH-Wert im Primärwasser unterscheidet man insbesondere die alkalische Fahrweise bei Einsatz von Alkalisierungsmitteln, die neutrale Fahrweise bei Zugabe von Oxidationsmitteln, die kombinierte Fahrweise und die Komplexon-Fahrweise. Die Verminderung der Korrosion in einem Kernreaktor stellt den Fachmann vor außergewöhnliche Herausforderungen, da im Primärwasser eine sehr hohe Temperatur, ein sehr hoher Druck und zudem noch eine sehr starke Gamma- und Neutronenstrahlung vorherrschen, wobei insbesondere die Gamma- und Neutronenstrahlung die Korrosionsprozesse anders ablaufen lassen als außerhalb kerntechnischer Anlagen. Andererseits muss bei einer Maßnahme zur Korrosionsverminderung in einem Kernreaktor auch sichergestellt sein, dass durch in das Reaktorwasser eingebrachte Chemikalien keine die Radioaktivität im Primärkreislauf erhöhenden Ablagerungen entstehen. Es dürfen auch keine Ablagerungen bewirkt werden, die - beispielsweise in einem Dampferzeuger - die Wärmeübertragung vermindern und somit die Effizienz des Kernreaktors vermindern würden.

In Kernkraftwerken können durch strahlungsinduzierte Vorgänge im Reaktorwasser Oxidationsmittel, insbesondere Sauerstoff, entstehen, welche die Korrosion, insbesondere die Spannüngs-Riss-Korrosion, der Bauteile in wasserführenden Leitungssystemen negativ beeinflussen. Eine mögliche Gegenmaßnahme in Druckwasserreaktoren ist die Zugabe von Reduktionsmitteln, insbesondere Wasserstoff. Für Siedewasser-Reaktoren ist es beispielsweise aus der EP 0 514 089 B1 bekannt, Katalysatormaterial in den Primärkreislauf oder ins Reaktorwasser einzubringen, um den Abbau der schädlichen Oxidationsmittel ohne oder mit nur wenig Reduktionsmittelzugabe bewerkstelligen zu können.

Eine andere Vorgehensweise besteht darin, das zu schützende Bauteil an seiner Oberfläche mit einer Schutzschicht zu überziehen, welche die Sauerstoffdiffusion zur metallischen Bauteiloberfläche hemmt. Beispielsweise ist aus DE 197 21 080 C1 bekannt, eine korrosionshemmende Fremdoxidschicht auf das Bauteil aufzubringen. Durch einen derartigen elektrisch isolierenden Überzug auf der Oberfläche von Metallkomponenten wird das Korrosionspotential in negativer Richtung verschoben und somit die Korrosion, insbesondere Spannungs-Riss-Korrosion, reduziert. Dazu muss nicht notwendigerweise Wasserstoff zugegeben werden oder Katalysatormaterial vorhanden sein.

Aus der EP 0 826 789 A1 ist es bekannt, in eine auf der metallischen Bauteiloberfläche vorhandene oder gebildete Oxidschicht Metalle, insbesondere Nichtedelmetalle, wie Zirkonium, Titan, Nickel, Hafnium und andere, einzubauen. Zur Dosierung der Oxidschicht werden Metallverbindungen in Wasser, insbesondere im Reaktorwasser, gelöst, von dem aus sie in den vorhandenen oder gesondert gebildeten Oxidfilm inkorporiert werden.

Das Dotieren einer vorhandenen Oxidschicht oder das Aufbringen einer Oxidschicht verbunden mit nachträglichem Dotieren derselben führt nicht immer zu einem ausreichend korrosionsreduzierenden Ergebnis.

Der Erfindung liegt daher die Aufgabe zugrunde, ein Verfahren zur Verminderung der Korrosion eines Bauteils in einem wasserführenden Leitungssystem einer kerntechnischen Anlage anzugeben, mit dem eine Schutzschicht auf dem Bauteil in einfacher Weise aufbringbar ist, wobei die gebildete Schutzschicht eine starke korrosionsvermindernde Wirkung auf das Bauteil hat. Diese Aufgabe wird dadurch gelöst, dass unter Anwendung eines Sol-Gel-Verfahrens eine Schutzschicht auf dem Bauteil erzeugt wird. Mit dem Verfahren ist insbesondere die interkristalline Spannungs-Riss-Korrosion in der kerntechnischen Anlage reduzierbar. Die Spannungs-Riss-Korrosion kann beispielsweise strahlungsinduziert sein.

Dabei geht die Erfindung von der neuen Erkenntnis aus, dass eine nach dem Sol-Gel-Verfahren hergestellte Schutzschicht im Bereich der Kerntechnik einsetzbar ist und dort insbesondere den hohen Anforderungen hinsichtlich Beständigkeit unter Einwirkung radioaktiver Strahlung und gleichzeitig bei hohem Druck und bei hohen Temperaturen in Wasser von mehreren 100 °C, gegebenenfalls verbunden mit starken mechanischen Vibrationen, standhält. Die Trocknung des Solfilms wird bei einer Temperatur durchgeführt, die größer als die lokale Raumtemperatur und kleiner als 350 °C, insbesondere kleiner als 250 °C ist. Dabei geht die Erfindung von der weiteren grundlegenden Erkenntnis aus, dass auch bei einer derart niedrigen Wärmenachbehandlungstemperatur eine stark korrosionshemmende Schutzschicht mit dem Sol-Gel-Verfahren erzeugbar ist. Bisher war man davon ausgegangen, dass erheblich höhere Temperaturen, zumindest mehr als 400 °C, zur Durchführung des Sol-Gel-Verfahrens erforderlich sind. Mit an den bei dem Verfahren nach der Erfindung bevorzugten niedrigen Temperaturen wird der Vorteil einer einfachen großtechnischen Durchführbarkeit, insbesondere mit geringem Energieaufwand, erreicht. Die Schutzschicht ist eine Fremdoxidschicht, die bevorzugt ein Oxid eines Metalls der vierten Nebengruppe enthält, wobei das Metall beispielsweise Zirkonium oder Titan ist. Die Schutzschicht enthält insbesondere ZrO₂ oder TiO₂. Solche Schutzschichten erreichen eine für den Reaktorbetrieb besonders vorteilhafte hohe Schmelztemperatur sowie ebenfalls vorteilig für den kerntechnischen Einsatz eine geringe Löslichkeit in Wasser. Das mit dem Verfahren nach der Erfindung mit einer Schutzschicht überzogene Bauteil besteht aus einem unlegierten oder niedrig legierten Stahl, einem Chromstahl, einem, insbesondere austenitischen, Chrom-Nickel-Stahl, aus einem Edelstahl (stainless steel) oder aus einer Nickelbasislegierung, z.B. Alloy 600 oder Alloy 182.

Außerdem macht sich die Erfindung die Erkenntnis zunutze, dass mit einer nach dem Sol-Gel-Verfahren hergestellte Schutzschicht ein Bauteil einer kerntechnischen Anlage besonders zuverlässig und effizient und somit besonders vorteilhaft vor Korrosion schützbar ist.

Ein weiterer Vorteil des Verfahrens besteht darin, dass eine auf dem Bauteil bereits vorhandene Eigenoxidschicht auf dem Bauteil belassen werden kann. Die nach dem Verfahren aufgebrachte Schutzschicht kann auf dieser Eigenoxidschicht aufgebracht werden. Die Eigenoxidschicht kann z.B. während des Reaktorbetriebs entstanden sein.

Nach einer bevorzugten Ausgestaltung wird vor Anwendung des Sol-Gel-Verfahrens das Bauteil benetzendes Wasser aus dem Leitungssystem entfernt und nach Anwendung des Sol-Gel-Verfahrens das Leitungssystem erneut mit Wasser gefüllt. Beispielsweise wird das Sol-Gel-Verfahren bei abgeschaltetem Reaktor durchgeführt.

Nach dem Entfernen des Wassers, welches das Bauteil benetzt, wird das Bauteil insbesondere getrocknet. Dies bedeutet, dass in einem gesonderten Trocknungsschritt nach Ablassen oder Abpumpen des Wassers gegebenenfalls am Bauteil verbleibendes Restwasser entfernt wird, und zwar vor Auf- oder Einbringung des Sols. Dadurch wird erreicht, dass auch bei Verwendung eines Sols, das wasserempfindlich ist, keine die Schutzschichtqualität beeinflussenden Wasserrückstände verbleiben.

Vorzugsweise wird auf der erzeugten Schutzschicht eine weitere Schutzschicht unter Anwendung eines Sol-Gel-Verfahrens erzeugt. In diesem Fall können die beiden erzeugten Schutzschichten unterschiedliche chemische Zusammensetzung aufweisen.

Es wird insbesondere zum Erzeugen der Schutzschicht zunächst ein flüssiger Solfilm auf das Bauteil aufgebracht, und anschließend der Solfilm getrocknet.

Das Sol kann z.B. hergestellt werden, indem ein Precursor für die zu bildende Schutzschicht mit einem entsprechenden Lösungsmittel, insbesondere einem Alkohol, und optional Wasser in den Solzustand übergeführt wird. Der Gelzustand kann dann durch Wasserentzug des Sols beim Trocknen hergestellt werden. Beim weiteren Trocknen kann eine Sinterung von gebildeten Gelteilchen stattfinden.

Mit dem Sol-Gel-Prozess können besonders feinkörnige Matrixgefüge mit sehr enger Verteilung der Korngrößen erzeugt werden. Die Schutzschicht weist besonders kleine Teilchengrößen auf, typischerweise im Bereich von 5 nm bis 50 nm. Mit anderen Worten: es ist eine hochverdichtete und somit besonders gut abdichtende und korrösionsmindernde Schutzschicht auf dem Bauteil erzeugbar.

Vorzugsweise wird der Solfilm aufgesprüht, aufgespritzt oder aufgestrichen. Dafür ergibt sich der Vorteil, dass besonders wenig Sol zur Schutzschichtbildung erforderlich ist.

Nach einer besonders bevorzugten Ausgestaltung wird der Solfilm aufgebracht, indem ein Sol in einen Innenraum des Leitungssystems, aus dem das Wasser entfernt wurde, und in Kontakt mit dem Bauteil gebracht wird, und es wird anschließend das Sol aus dem Innenraum abgelassen oder abgepumpt, so dass auf dem Bauteil der Solfilm verbleibt. Dadurch ergibt sich der besondere Vorteil, dass - insbesondere bei längerer Einwirkzeit - alle Bauteile in einem bestimmten Abschnitt des Leitungssystems, welcher vor Korrosion geschützt werden soll, in einem Schritt mit einer Schutzschicht überziehbar sind. Dies gilt insbesondere für schwer zugängliche Bereiche in dem Leitungssystem.

Das Bauteil ist z.B. ein Rohr, ein Rohrleitungsabschnitt, ein Ventil, eine Pumpe, ein Behälter oder eine Komponente in einem solchen Behälter oder Rohr. Beispielsweise findet das Verfahren zur Beschichtung der Innenoberfläche des Reaktordruckbehälters statt. Der Solfilm kann dann z.B. auf der Innenoberfläche aufgebracht werden, indem nach Ablassen des Kühlwassers ein Manipulatormast mit einer endseitigen Sprüheinrichtung in den Innenraum des Reaktordruckbehälters eingeführt wird und das Sol von dort auf die Innenoberfläche aufgesprüht wird. Alternativ kann nach dem Ablassen des Kühlwassers der Innenraum des Reaktordruckbehälters mit dem Sol gefüllt werden. Dabei können ein oder mehrere Verdrängungskörper, z.B. eine luftgefüllte Gummiblase, zum Einsatz kommen, um die Menge des zum Benetzen der Innenoberfläche des Reaktordruckbehälters erforderlichen Sols zu vermindern. Vorzugsweise wird das Sol derart aus dem Innenraum abgelassen bzw. abgepumpt, dass der Solpegel im Innenraum mit einer, insbesondere konstanten Geschwindigkeit aus dem Bereich von 0,5 cm/min bis 100 cm/min, besonders bevorzugt aus dem Bereich 30 cm/min bis 60 cm/min, sinkt. Auf diese Weise ist eine besonders homogene Schutzschicht erzeugbar. Außerdem ist auf diese Weise eine besonders dünne Schutzschicht herstellbar.

Es wird insbesondere eine Schutzschicht mit einer Dicke von weniger als 1 µm erzeugt. Die Dicke beträgt beispielsweise mehr als 50 nm oder mehr als 100 nm.

Weiterhin besonders bevorzugt ist eine Ausgestaltung des Verfahrens, bei dem zum Trocknen des Solfilms heiße Luft auf das Bauteil geblasen wird. vorzugsweise wird dabei im Leitungssystem Luft, insbesondere heiße Luft, umgewälzt.

Die Schutzschicht kann z.B. ein Siliziumoxid, z.B. SiO₂, enthalten. Ein zur Durchführung des Sol-Gel-Verfahrens besonders bevorzugtes Sol ist eine Lösung eines Metall-Alkoxids, bevorzugt Zirkonium-Tetra-n-Propoxid, in einem Alkohol, insbesondere n-Propanol, mit optionalem Zusatz von Wasser und/oder einer organischen Säure, beispielsweise Essigsäure. Damit ist das Verfahren sowohl in einfacher Weise technisch durchführbar als auch ist damit eine besonders gut korrosionshemmende Schutzschicht erzeugbar.

Das Bauteil besteht vorzugsweise aus rostfreiem Edelstahl,. insbesondere aus austenitischem Chrom-Nickel-Stahl oder aus einer Nickelbasislegierung.

Nachfolgend wird das Verfahren nach der Erfindung anhand von Ausführungsbeispielen und anhand der Figuren 1 bis 4 näher erläutert. Es zeigen:
- FIG 1: das Ergebnis von Referenzmessungen,
- FIG 2: das Ergebnis von Messungen an nach einem Sol-Gel-Verfahren nach der Erfindung auf verschiedenen Bauteilen aufgebrachten Schutzschichten,
- FIG 3: eine erste Variante zum Aufbringen eines Sols auf ein Bauteil einer kerntechnischen Anlage, und
- FIG 4: zweite Variante zum Aufbringen eines Sols auf ein Bauteil einer kerntechnischen Anlage.

In einem Laborexperiment wurde ein Sol erzeugt, indem ein Alkoxid-Precursor durch Lösen in n-Propanol und Wasser in den Solzustand übergeführt wurde. Die Synthese fand unter Raumtemperatur, atmosphärischem Druck und bei einem pH-Wert zwischen 4 und 4,5 statt, der durch Zugabe von Essigsäure eingestellt wurde. Die Sol-Konzentration lag zwischen 0,2 mol und 0,5 mol.

Als Precursor, d.h. als "Zirkonium-Quelle", diente Zirkonium-Tetra-n-Propoxid (Zr(OC₃H₇)₄). Die Essigsäure dient auch als Kondensationskatalysator. Sie kann auch zur Komplexbildung beitragen. Der Lösung wurde das Wasser tropfenweise unter Umrühren zugegeben.

Das Sol kann auch erzeugt werden, indem als Alkoxid-Precursor Zirkonium-Tetra-Iso-Propoxid verwendet und dieses in Isopropanel und Wasser gelöst wird. Die Verwendung von Zirkonium-Tetra-n-Propoxid und n-Propanol ist bevorzugt, da sich dabei eine besonders hohe Stabilität des Alkoxid-Precursors in der Lösung ergibt. Metall-Alkoxide sind nämlich häufig wasserempfindlich, insbesondere hat Zirkoniumoxid in Wasser eine niedrige Löslichkeit. Gibt man zu schnell oder zu viel Wasser zu, fallen die Metall-Alkoxide bzw. entsprechende Metall-Hydroxide aus. Bei Verwendung von Zirkonium-Tetra-n-Propoxid und n-Propanol sind diese Nachteile - insbesondere für die großtechnische Anwendung - reduziert.

In dem Laborexperiment wurden verschiedene Edelstahlbauteile als Probenstücke (20 mm x 10 mm x 3 mm) in einen Behälter eingebracht, der mit dem Sol gefüllt wurde.

Die verwendeten Bauteile bestanden aus sensibilisiertem, austenitischem Chrom-Nickel-Stahl 1.4550 mit folgender beispielhafter Zusammensetzung in Gew.-%:
Fe 69,05%, C 0,075%, Si 0,52%, Mn 1,17%, P 0,027%,
S 0,024%, Cr 17,85%, Ni 10,50%, Nb 0,78%.

Ein solcher Stahl ist zur Verwendung im Leitungssystem eines Kernkraftwerks vorgesehen.

Die Bauteile wurden in voroxidierter Form verwendet, d.h. es war in Analogie zu gewöhnlichen Reaktor-Betriebsbedingungen eine dünne stabile Eisen-Nickel-Chrom-Oxidschicht (Eigenoxidschicht) gebildet. Diese kann z.B. durch 300-stündige Oxidation bei einer O₂-Konzentration von 8 ppm und bei 280 °C entstehen. Im Kernkraftwerk entsteht eine solche Oxidschicht während des Reaktorbetriebs infolge der hohen Kühlwassertemperatur und der während des Betriebs gebildeten Oxidationsmittel.

Die Bauteile wurden mit dem genannten Sol benetzt, indem dieses in einen Innenraum eines Leitungssystems eingebracht wurde. Anschließend wurde das Sol derart abgelassen, dass sich der Sol-Pegel mit einer Geschwindigkeit von 1 cm/min senkt. Die Geschwindigkeit des Absenkens des Sol-Pegels kann auch 10 cm/min oder mehr, insbesondere bis zu 100 cm/min, betragen. Je höher die Ablaufgeschwindigkeit, umso dicker wird der erzeugte Flüssigkeits- oder Sol-Film. Eine hohe Ablaufgeschwindigkeit ist für die großtechnische Anwendung in einem Kernkraftwerk bevorzugt, da dadurch die Revisionszeit vermindert werden kann.

Nach dem Ablassen des Sols aus dem Behälter, in den die Bauteile eingebracht wurden, wurde der auf den Bauteilen verbleibende Sol-Film getrocknet. Die Abtrocknung des Sol-Films und die Entfernung seiner organischen Bestandteile während der Trocknung ist entscheidend für die Qualität der resultierenden Zirkonium-Oxid-Schutzschicht (ZrO₂). Bei einem sehr langsamen und vorsichtigen Aufheizen kann der Sol-Film gleichmäßig durchreagieren und seine Reaktionsprodukte homogen abgeben.

Für das Trocknen des Sol-Films wurden verschiedene Varianten erprobt. Dabei hat sich folgende Vorgehensweise als besonders vorteilhaft erwiesen
a) Trocknen des Sol-Films auf dem Bauteil im Behälter nach Ablassen des Sols über einen Zeitraum von wenigstens 12 Stunden.
b) Anschließend Trocknung des Bauteils für zwei Stunden bei 60 °C in Luft (Luftumwälzofen).
c) Weitere schrittweise Temperaturerhöhung in folgenden Stufen:
   80 °C für zwei Stunden,
   100 °C für zwei Stunden,
   110 °C für 30 Minuten,
   120 °C für 30 Minuten,
   130 °C für 30 Minuten,
   140 °C für 30 Minuten,
   150 °C für 30 Minuten,
   160 °C für 30 Minuten,
   170 °C für 30 Minuten,
   180 °C für 30 Minuten,
   190 °C für 30 Minuten,
   200 °C für 30 Minuten,
   210 °C für 30 Minuten,
   220 °C für 24 Stunden.

Durch die vorgenannte sehr langsame und vorsichtige Trocknungs- und Ausheizbehandlung besteht ausreichend Zeit für Kondensationsreaktionen im Film und für die Abgabe der organischen Lösungsbestandteile. Dadurch wird eine hohe Filmqualität erreicht unter Vermeidung von Eigenspannungen und Rissbildung.

Insgesamt dauert die Trocknungs- und Ausheizphase mit den beschriebenen Parametern ca. 48 Stunden. Für die großtechnische Anwendung im Kernkraftwerk kann diese Phase auf etwa die Hälfte verkürzt werden.

Bei der Wärmebehandlung unter 250 °C kann es vorkommen, dass das Zirkonium im Film nicht vollständig in Form von Zirkoniumoxid (ZrO₂) auskristallisiert. Der Zirkonium-Oxidfilm ist dann möglicherweise noch teilamorph und enthält unter Umständen auch noch organische Bestandteile. Dies spielt jedoch - wie Messungen zeigen - für seine Schutzqualität keine wesentliche Rolle.

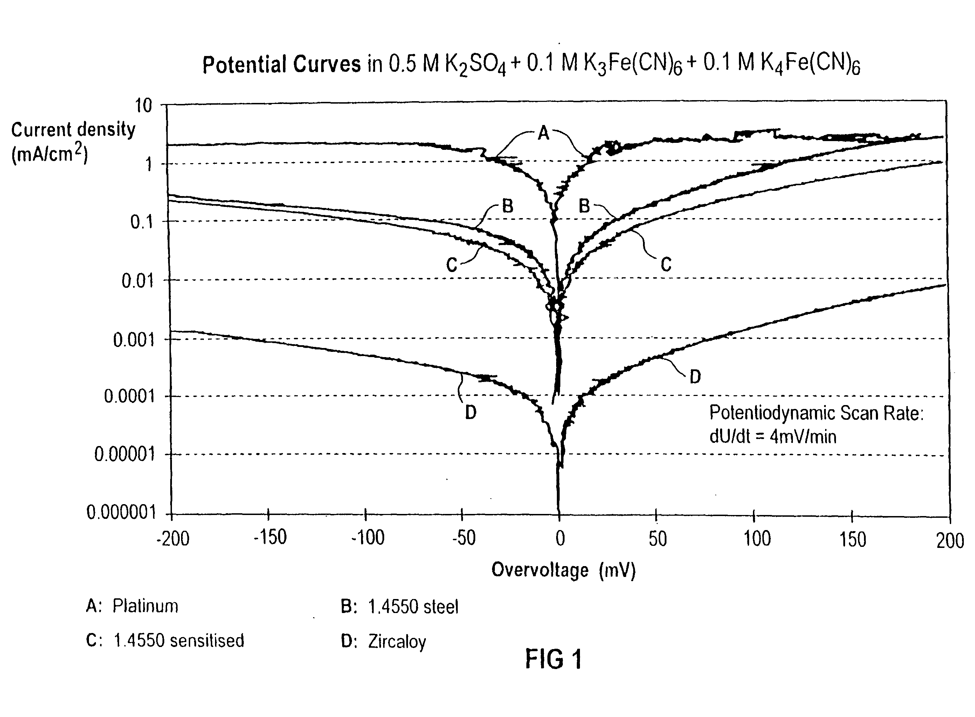

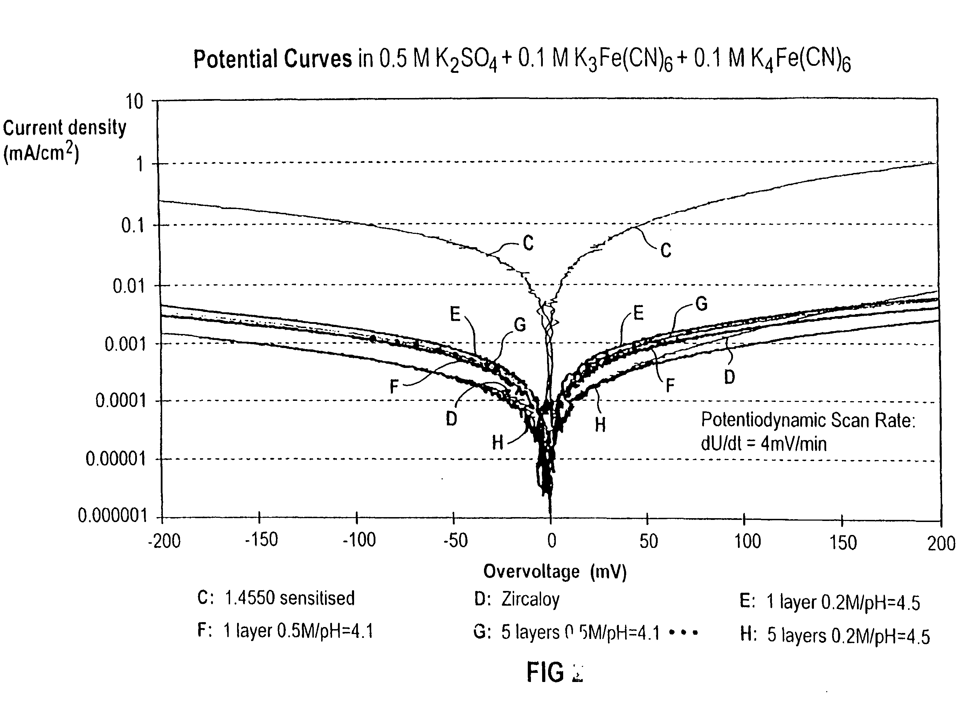

Die Elektrodeneigenschaften von Bauteilen, die in der beschriebenen Weise oder ähnlich behandelt wurden, sind denen von Zirkonium-Legierungen sehr ähnlich. Zum Beleg hierzu wurde in einem Prüfverfahren die Polarisation beschichteter Bauteile in Fe⁺²/Fe⁺³-Hexa-Cyanoferrat-Lösung gemessen. Das Ergebnis einer solchen Messung ist in Figur 2 dargestellt. Entsprechende Referenzkurven sind Figur 1 zu entnehmen.

Bei dem an sich bekannten Prüfverfahren findet ein Ladungsübergang aus der Lösung heraus auf eine als Elektrode geschaltete Probe statt. Die Probe ist entweder ein beschichtetes Bauteil oder ein Referenzbauteil. Der Ladungsübergang wird durch die elektrischen Leitungseigenschaften eines auf dem Bauteil gegebenenfalls gebildeten Oxidfilms deutlich beeinflusst und stellt ein Maß für die Güte der Beschichtung dar.

Hierzu sei zunächst auf Figur 1 verwiesen, in der Referenzkurven dargestellt sind. Bei einer ersten Referenzmessung A an Platin ist ersichtlich, dass keine den Ladungsdurchtritt behindernde Oxidschicht gebildet ist. Aus den zwei weiteren Referenzmessungen B für Chrom-Nickel-Stahl 1.4550 bzw. C für sensibilisierten Chrom-Nickel-Stahl 1.4550 ist ersichtlich, dass auf diesen unbeschichteten Stahlproben halbleitende Oxide vorliegen. Bei einer vierten in Figur 1 dargestellten Referenzmessung D, die mit einer Zirkoniumlegierung (Zirkalloy, Zircaloy) durchgeführt wurde, ist ein Zirkoniumoxidfilm (ZrO₂) vorhanden, der ein Isolator ist. Der Ladungstransfer von der Lösung auf die Elektrode ist nahezu vollständig unterdrückt.

Die Güte der mit dem Verfahren nach der Erfindung auf Stahl erzeugten ZrO₂-Schutzschichten ist mittels der in Figur 2 dargestellten Messkurven dokumentiert. In diese Figur 2 sind die Referenzkurve C für sensibilisierten Chrom-Nickel-Stahl 1.4550 sowie die Referenzkurve D für Zirkalloy (Zircaloy), die bereits in Figur 1 gezeigt sind, zum besseren Vergleich nochmals eingetragen.

Außerdem sind in dieser Figur vier weitere Messkurven E, F, G, H zu Bauteilproben eingetragen, auf denen nach dem genannten Sol-Gel-Verfahren eine Zirkoniumoxid-Schutzschicht erzeugt wurde. Im Einzelnen sind diese Messungen bei folgenden Bauteilproben vorgenommen worden:
- E:: einlagige Schutzschicht (Zirkoniumoxid-Beschichtung), 0,2 molare Beschichtungslösung mit pH-Wert 4,5
- F:: einlagige Schutzschicht (Zirkoniumoxid-Beschichtung), 0,5 molare Beschichtungslösung mit pH-Wert 4,1
- G:: fünflagige Schutzschicht (Zirkoniumoxid-Beschichtung), 0,5 molare Beschichtungslösung mit pH-Wert 4,1
- H:: fünflagige Schutzschicht (Zirkoniumoxid-Beschichtung), 0,2 molare Beschichtungslösung mit pH-Wert 4,5.

Wie aus **Figur 2** ersichtlich ist, liegen die Messkurven E, F, G, H für Zirkoniumoxid-Beschichtungen auf Stahl sehr nahe bei der Referenzkurve D für eine Zirkalloy-Elektrode. Die Messkurve H entsprechend einer fünflagigen Beschichtung und einem 0,2 molaren Zirkonium-Sol ist sogar weitgehend deckungsgleich mit der Referenzkurve D für Zirkalloy und daher nur schwer in Figur 2 von dieser zu unterscheiden.

Die Messungen zeigen, dass der gebildete dünne Zirkonium-Oxidfilm - mit einer geschätzten Dicke im Bereich um circa 50 nm - die Edelstahlbauteilproben in gewünschter Weise schützt.

Die Polarisationswiderstandsmessungen ergaben, dass ein hoher pH-Wert im Sol die Qualität der erzeugten Schutzschicht erhöht. Auf der anderen Seite zeigt sich, dass eine sehr hohe Dicke der erzeugten Schutzschicht den Korrosionswiderstand eines Bauteils im Vergleich zu einer geringeren Schichtdicke nicht mehr wesentlich verbessert.

Das im Labormaßstab erprobte Sol-Gel-Verfahren ist z.B. im Anlagenstillstand eines Kernkraftwerks, z.B. eines Leichtwasserreaktors, durchführbar, nachdem das Reaktorkühlmittel entfernt wurde und die Komponentenoberflächen getrocknet wurden.

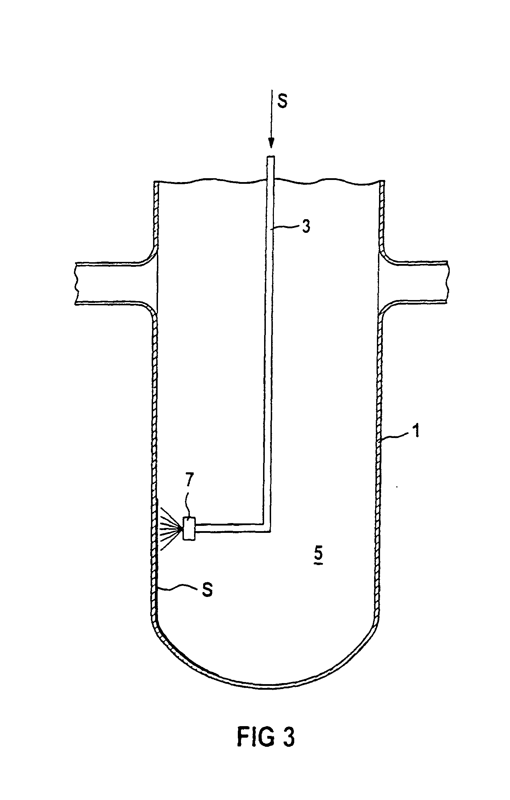

Anschließend kann das Sol durch Aufsprühen zum Beispiel auf die Innenoberfläche eines Reaktordruckbehälters 1 aufgebracht werden, wie in **Figur 3** schematisch dargestellt. Hierzu wird ein Manipulatormast 3 von oben in den Innenraum 5 eingeführt und von einem daran endseitig befestigten Sprühkopf 7 Sol S auf die Innenoberfläche gesprüht. Zur Minimierung des Sol-Verbrauchs kann an der Innenoberfläche herunterlaufendes, überschüssiges Sol aufgefangen und erneut dem Sprühkopf 7 zugeführt werden. Nachdem alle gewünschten Bereiche besprüht wurden, beginnt die Trocknung des aufgebrachten Sol-Films, insbesondere wie oben beschrieben.

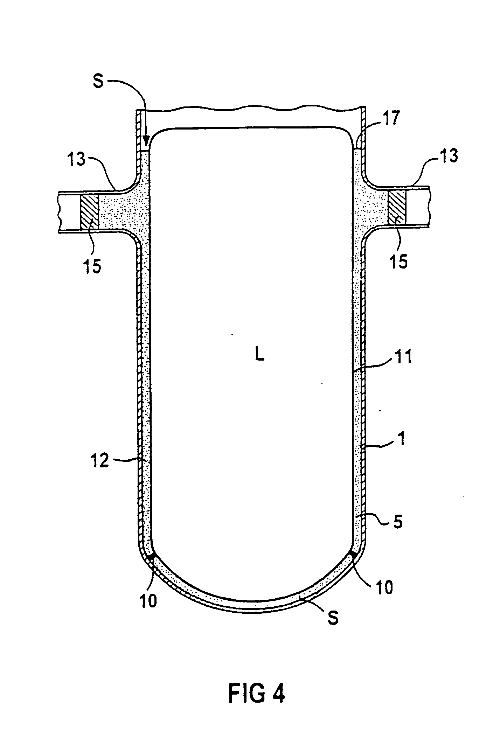

Eine andere Variante zum Aufbringen des Sols ist in **Figur 4** skizziert. In den Innenraum 5 des Reaktordruckbehälters 1 ist ein an die Innenkontur des Reaktordruckbehälters 1 grob angepasster, als Gummiblase ausgebildeter und mit Luft L gefüllter Verdrängungskörper 11 eingebracht. Dieser ist zur Kompensation der Auftriebskraft mittels Fixierelementen 10 am Reaktordruckbehälter 1 befestigt. In einen Zwischenraum 12 zwischen dem Verdrängungskörper 11 und der Innenoberfläche des Reaktordruckbehälters 1 wird das Sol S bis zu einem Pegel 17 eingefüllt. Der Zwischenraum 12 weist eine Breite von weniger als 0,5 m auf. Vorhandene Kühlkreislauf-Anschlussstutzen 13 sind hierzu jeweils mit einem Verschlusselement 15 abgedichtet. Nach einer Einwirkzeit von weniger als einer Stunde wird das Sol S mit konstanter Geschwindigkeit abgelassen und der Verdrängungskörper 11 entfernt. Danach beginnt die Trocknung des aufgebrachten Sol-Films, insbesondere wie oben beschrieben.

Nach abgeschlossener Trocknung kann das Kühlwasser wieder in den Reaktordruckbehälter 1 eingebracht werden und der Reaktorbetrieb wiederaufgenommen werden.

Bei den Beispielen der Figuren 3 und 4 kann der Reaktordruckbehälter 1 als zu beschichtendes Bauteil auch aus einem ferritischen Feinkornbaustahl, z.B. 22NiMoCr 37, hergestellt sein. Das Bauteil kann mit einer austenitischen Plattierung versehen sein.

Das Bauteil kann auch aus Ti-stabilisiertem Austenit 1.4541 (X6CrNiTi189) oder aus Nb-stabilisiertem Stahl 1.4550 (X6CrNiNb189) oder aus unstabilisiertem Austenit (z.B. US-Typ A 304) hergestellt sein.

Für eine großtechnische Durchführung des Sol-Gel-Verfahrens im Kreislaufsystem eines Nuklearkraftwerks ist die Erkenntnis von wesentlicher Bedeutung, dass die Wärmebehandlung oder Trocknung bei sehr niedrigen Temperaturen, z.B. auch noch bis herunter zu 50°C bis zu 60°C, möglich ist. Das Verfahren ist auch noch bei Temperaturen um 20°C durchführbar. Dies ermöglicht erst den Verzicht auf einen Trocknungsofen, in dem nur kleinere Komponenten beschichtet werden können, nicht aber ein vor Ort installiertes Rohrleitungssystem oder etwa ein Reaktordruckbehälter. Für eine kosteneffiziente großtechnische Durchführung spielt auch die Verwendung des Zirkonium-Tetra-n-Propoxids eine Rolle, das wesentlich preiswerter ist als Zirkonium-Tetra-iso-Propoxid.

## Patentansprüche

1. Verfahren zur Verminderung der Korrosion, insbesondere zur Verminderung der Spannungs-Riss-Korrosion eines Bauteils in einem wasserführenden Leitungssystem einer kerntechnischen Anlage, insbesondere eines Bauteils im Primärkreislauf eines Siedewasser-Reaktors, bei dem unter Anwendung eines Sol-Gel-Verfahrens eine Schutzschicht auf dem Bauteil erzeugt wird, wobei
- zum Erzeugen der Schutzschicht zunächst ein flüssiger Solfilm auf das Bauteil aufgebracht wird, und der Solfilm anschließend bei einer Temperatur, die größer als die lokale Raumtemperatur und kleiner als 350°C ist, getrocknet wird.
- die Schutzschicht eine Fremdoxidschicht ist, die ein Oxid eines Metalls der vierten Nebengruppe enthält, und
- das Bauteil aus einem unlegierten oder niedrig legierten Stahl, aus einem Chromstahl, aus einem Chrom-Nickel-Stahl, aus einem Edelstahl oder aus einer Nickelbasislegierung besteht.

2. Verfahren nach Anspruch 1,
wobei vor Anwendung des Sol-Gel-Verfahrens das Bauteil benetzendes Wasser aus dem Leitungssystem entfernt wird und insbesondere das Bauteil getrocknet wird, und wobei nach Anwendung des Sol-Gel-Verfahrens das Leitungssystem erneut mit Wasser gefüllt wird.

3. Verfahren nach Anspruch 1 oder 2,
bei dem auf der erzeugten Schutzschicht-eine weitere Schutzschicht unter Anwendung eines Sol-Gel-Verfahrens erzeugt wird.

4. Verfahren nach einem der Ansprüche 1 bis 3,
bei dem der Solfilm aufgesprüht, aufgespritzt oder aufgestrichen wird.

5. Verfahren nach einem der Ansprüche 1 bis 4,
bei dem der Solfilm aufgebracht wird, in dem ein Sol in einen Innenraum des Leitungssystems; aus dem das Wasser entfernt wurde, und in Kontakt mit dem Bauteil gebracht wird, und wobei das Sol anschließend aus dem Innenraum abgelassen oder abgepumpt wird, so dass auf dem Bauteil der Sölfilm verleibt.

6. Verfahren nach Anspruch 5,
wobei das Sol derart aus dem Innenraum abgelassen bzw. abgepumpt wird, dass der Solpegel im Innenraum mit einer, insbesondere konstanten, Geschwindigkeit aus dem Bereich von 0,5 cm/min bis 100 cm/min, vorzugsweise aus dem Bereich 30 cm/min bis 60 cm/min, sinkt.

7. Verfahren nach einem der Ansprüche 1 bis 6,
bei dem die Trocknung des Solfilms bei einer Temperatur durchgeführt wird, die größer als die lokale Raumtemperatur und kleiner als 250°C, ist.

8. Verfahren nach einem der Ansprüche 1 bis 7,
bei dem zur Trocknung des Solfilms die Temperatur von einer Starttemperatur, die insbesondere die lokale Raumtemperatur ist, bis zu einer Endtemperatur erhöht wird, wobei die Endtemperatur insbesondere kleiner als 300°C, bevorzugt kleiner als 250°C, ist.

9. Verfahren nach einem der Ansprüche 1 bis 8,
bei dem zum Trocknen des Solfilms im Leitungssystem Luft, insbesondere heiße Luft, umgewälzt wird.

10. Verfahren nach einem der Ansprüche 1 bis 9,
bei dem die Fremdoxidschicht ist die ein Oxid von Zirkonium oder Titan ist.

11. Verfahren nach einem der Ansprüche 1 bis 10,
wobei als Sol eine Lösung eines Metall-Alkoxids, bevorzugt Zirkonium-Tetra-n-Propoxid (Zr(OC₃H₇)₄), in einem Alkohol, insbesondere n-Propanol, mit optionalem Zusatz von Wasser und/oder einer organischen Säure, beispielsweise Essigsäure, verwendet wird.

12. Verfahren nach einem der Ansprüche 1 bis 11,
wobei die Schutzschicht auf eine Eigenoxidschicht des Bauteils aufgebracht wird, und wobei die Eigenoxidschicht vorzugsweise während des Reaktorbetriebs entstanden ist.

## Claims

1. Process for reducing the corrosion, in particular for reducing the stress-corrosion cracking, of a component in a water-carrying system of lines in a nuclear engineering plant, in particular of a component in the primary circuit of a boiling water reactor, in which a protective layer is produced on the component using a sol-gel process,
- to produce the protective layer, first of all a liquid sol film is applied to the component, and the sol film is then dried at a temperature which is greater than the local room temperature and less than 350°C,
- the protective layer is a foreign oxide layer which contains an oxide of a metal from the fourth transition group, and
- the component consists of an unalloyed or low-alloy steel, of a chromium steel, of a chromium-nickel steel, of a stainless steel or of a nickel-base alloy.

2. Process according to Claim 1, in which, before the sol-gel process is applied, water which wets the component is removed from the system of lines, and in particular the component is dried, and in which after the sol-gel process has been applied, the system of lines is filled again with water.

3. Process according to Claim 1 or 2, in which a sol-gel process is used to produce a further protective layer on the protective layer which has already been produced.

4. Process according to one of Claims 1 to 3, in which the sol film is sprayed or spread on.

5. Process according to one of Claims 1 to 4, in which the sol film is applied as a result of a sol being introduced into an interior of the system of lines, from which the water has been removed, and brought into contact with the component, and in which the sol is then drained or pumped out of the interior, so that the sol film remains on the component.

6. Process according to Claim 5, in which the sol is drained or pumped out of the interior in such a manner that the sol level in the interior falls at a rate, in particular a constant rate, in the range from 0.5 cm/min to 100 cm/min, preferably in the range from 30 cm/min to 60 cm/min.

7. Process according to one of Claims 1 to 6, in which the drying of the sol film is carried out at a temperature which is greater than the local room temperature and less than 250°C.

8. Process according to one of Claims 1 to 7, in which, to dry the sol film, the temperature is increased from a starting temperature, which in particular is the local room temperature, to a final temperature, the final temperature being in particular less than 300°C, preferably less than 250°C.

9. Process according to one of Claims 1 to 8, in which air, in particular hot air, is circulated in the system of lines in order to dry the sol film.

10. Process according to one of Claims 1 to 9, in which the foreign oxide layer comprises an oxide of zirconium or titanium.

11. Process according to one of Claims 1 to 10, in which the sol used is a solution of a metal alkoxide, preferably zirconium tetra-n-propoxide (Zr(OC₃H₇)₄), in an alcohol, in particular n-propanol, with the optional addition of water and/or an organic acid, for example acetic acid.

12. Process according to one of Claims 1 to 11, in which the protective layer is applied to a native oxide layer of the component, and in which the native oxide layer has preferably been formed during reactor operation.

## Revendications

1. Procédé de réduction de la corrosion, en particulier de réduction de la corrosion au niveau de fissures dues à des contraintes dans un élément de construction d'un système de conduites hydrauliques d'une installation nucléaire, en particulier dans un élément de construction du circuit primaire d'un réacteur à eau bouillante, procédé dans lequel une couche de protection est déposée sur l'élément de construction en utilisant un procédé sol-gel,
- un film de sol liquide étant déposé tout d'abord sur l'élément de construction afin de générer la couche de protection, et le film de sol étant ensuite séché à une température qui est supérieure à la température ambiante locale et inférieure à 350°C,
- la couche de protection étant une couche d'oxyde étranger qui contient un oxyde d'un métal du quatrième sous-groupe, et
- l'élément de construction étant constituée d'un acier non allié ou faiblement allié, d'un acier chromé, d'un acier au nickel-chrome, d'un acier fin ou d'un alliage à base de nickel.

2. Procédé selon la revendication 1, dans lequel avant d'utiliser le procédé sol-gel l'eau humidifiant l'élément de construction est éliminée du système de conduites et en particulier l'élément de construction est séché, et dans lequel après avoir utilisé le procédé sol-gel le système de conduites est de nouveau rempli d'eau.

3. Procédé selon la revendication 1 ou 2, dans lequel une autre couche de protection est déposée sur la couche de protection générée en utilisant un procédé sol-gel.

4. Procédé selon l'une des revendications 1 à 3, dans lequel le film de sol est déposé par pulvérisation, projection ou enduction.

5. Procédé selon l'une des revendications 1 à 4, dans lequel on applique le film de sol dans lequel un sol a été mis en contact avec l'élément de construction dans un espace intérieur du système de conduites duquel l'eau a été éliminée, et dans lequel le sol est ensuite éliminé ou pompé de l'espace intérieur de sorte que le film de sol reste sur l'élément de construction.

6. Procédé selon la revendication 5, dans lequel le sol est éliminé respectivement pompé de l'espace intérieur de telle sorte que le niveau de sol dans l'espace intérieur diminue à une vitesse, en particulier constante, de l'ordre de 0,5 cm/min à 100 cm/min, avantageusement de l'ordre de 30 cm/min à 60 cm/min.

7. Procédé selon l'une des revendications 1 à 6, dans lequel le séchage du film de sol est réalisé à une température qui est supérieure à la température ambiante locale et inférieure à 250°C.

8. Procédé selon l'une des revendications 1 à 7, dans lequel pour sécher le film de sol la température est élevée d'une température de départ, qui est en particulier la température ambiante locale, jusqu'à une température finale, la température finale étant en particulier inférieure à 300°C, de préférence inférieure à 250°C.

9. Procédé selon l'une des revendications 1 à 8, dans lequel on fait circuler de l'air, en particulier de l'air chaud, dans le système de conduites pour sécher le film de sol.

10. Procédé selon l'une des revendications 1 à 9, dans lequel le film d'oxyde étranger est un oxyde de zirconium ou de titane.

11. Procédé selon l'une des revendications 1 à 10, dans lequel on utilise comme sol une solution d'un alcoolate métallique, de préférence du tétra-n-propanolate de zirconium (Zr(OC₃H₇)₄), dans un alcool, en particulier du n-propanol, avec addition éventuelle d'eau et/ou d'un acide organique, par exemple de l'acide acétique.

12. Procédé selon l'une des revendications 1 à 11, dans lequel la couche de protection est déposée sur une couche d'oxyde propre de l'élément de construction et dans lequel la couche d'oxyde propre est formée avantageusement pendant le fonctionnement du réacteur.
